# EUROPÄISCHE PATENTANMELDUNG

(11) **EP 3 560 864 A1**
(43) Veröffentlichungstag der Anmeldung: **30.10.2019**
(21) Anmeldenummer: 19164538.1
(22) Anmeldetag: 22.03.2019
(51) Int. Cl.: B65G 53/42, B65G 53/50, B65G 53/58

(54) **SAUGFÖRDERDÜSE ZUM PNEUMATISCHEN FÖRDERN VON GRANULAT**

(30) Priorität: 27.04.2018 DE 102018110207
(71) Anmelder: Baumer hhs GmbH, 47829 Krefeld (DE)
(72) Erfinder: Istemaas, Wilhelm, 46419 Isselburg (DE); Scherberich, Lars, 47918 Tönisvorst (DE); Novinscak, Michael, 40723 Hilden (DE); Abelius, Marco, 52477 Alsdorf (DE)
(74) Vertreter: Strauss, Steffen

(57) **Zusammenfassung**

Die Offenbarung betrifft eine Saugförderdüse zum pneumatischen Fördern von Granulat, mit einem Düsenkörper mit einem Förderkanal, einer Druckluftzufuhr zum Bereitstellen von Druckluft zum pneumatischen Fördern des Granulats durch den Förderkanal und einem Vibrationselement, welches dazu ausgebildet ist, den Düsenkörper in Vibrationen zu versetzen, wobei das Vibrationselement einen ringförmigen Führungskanal und einen im Führungskanal frei gelagerten Körper umfasst, wobei der Führungskanal über eine erste Öffnung mit der Druckluftzufuhr kommuniziert, um Druckluft in den Führungskanal einzuführen, um den frei gelagerten Körper in eine periodische Bewegung innerhalb des Führungskanals zu versetzen, welche den Düsenkörper in Vibrationen versetzt, und wobei der Führungskanal über eine zweite Öffnung mit dem Förderkanal kommuniziert, um die Druckluft zum pneumatischen Fördern des Granulats von der Druckluftzufuhr über den Führungskanal in den Förderkanal des Düsenkörpers einzubringen.

## Beschreibung

### Technisches Gebiet

Die vorliegende Erfindung betrifft eine Saugförderdüse, insbesondere eine Saugförderdüse zum pneumatischen Fördern von Granulat.

### Technischer Hintergrund

Saugförderdüsen dienen zum Fördern eines Fördermaterials mittels Verwendung von Druckluft. Hierbei wird über eine in einem Förderkanal der Düse strömende Druckluft an einer Ansaugseite der Düse ein Unterdruck erzeugt, der bewirkt, dass das zu fördernde Fördermaterial in den Förderkanal der Düse eingesaugt wird. Zum Fördern von Granulat oder anderem grob kernigem Schüttgut wird die Saugförderdüse in das zu fördernde Fördermaterial eingetaucht. Bei Granulaten tritt hierbei das Problem auf, dass aufgrund von Verkantungen der Granulatkörner Granulat nicht automatisch in den Förderbereich direkt vor der Ansaugseite der Düse nachrutscht. Somit kann der Fall auftreten, dass das direkt vor der Ansaugseite der Düse befindliche Granulat abgesaugt ist, ohne dass neues Granulat in diesen Bereich nachrutscht und somit im Förderbereich direkt vor der Ansaugseite der Düse ein Hohlraum entsteht und der Förderprozess unterbrochen ist. Aus dem Stand der Technik sind Lösungen bekannt, dieses Problem zu beheben. Beispielsweise wird mittels Einblasen von Druckluft in das Granulat, dieses aufgelockert und zum Nachrutschen angetrieben. Die bekannten Lösungen führen jedoch nicht zu optimalen Ergebnissen.

Es ist daher die Aufgabe der vorliegenden Erfindung, eine verbesserte Saugförderdüse zum pneumatischen Fördern von Granulat bereitzustellen.

Diese Aufgabe wird durch den Gegenstand des unabhängigen Anspruchs 1 gelöst. Vorteilhafte Ausführungsformen der Erfindung sind Gegenstand der abhängigen Ansprüche, der Beschreibung sowie der beiliegenden Figuren.

Die Offenbarung basiert auf der Erkenntnis, dass die obige Aufgabe über eine Saugförderdüse gelöst wird, die mittels Vibrationen der Saugförderdüse innerhalb des Granulats, dieses auflockert, sodass zu förderndes Granulat in den Förderbereich vor der Saugförderdüse nachrutscht.

Nach einem Aspekt betrifft die Offenbarung eine Saugförderdüse zum pneumatischen Fördern von Granulat, mit einem Düsenkörper mit einem Förderkanal, einer Druckluftzufuhr zum Bereitstellen von Druckluft zum pneumatischen Fördern des Granulats durch den Förderkanal und einem Vibrationselement, welches dazu ausgebildet ist, den Düsenkörper in Vibrationen zu versetzen, wobei das Vibrationselement einen ringförmigen Führungskanal und einen im Führungskanal frei gelagerten Körper umfasst, wobei der Führungskanal über eine erste Öffnung mit der Druckluftzufuhr kommuniziert, um Druckluft in den Führungskanal einzuführen, um den frei gelagerten Körper in eine periodische Bewegung innerhalb des Führungskanals zu versetzen, welche den Düsenkörper in Vibrationen versetzt, und wobei der Führungskanal über eine zweite Öffnung mit dem Förderkanal kommuniziert, um die Druckluft zum pneumatischen Fördern des Granulats von der Druckluftzufuhr über den Führungskanal in den Förderkanal des Düsenkörpers einzubringen. Hierdurch wird der technische Vorteil erreicht, dass die Saugförderdüse über das in dem Düsenkörper ausgebildete Vibrationselement in Vibrationen und damit in Bewegung versetzbar ist.

Über die Vibrationen und Bewegungen der Saugförderdüse, die ansonsten an einem flexiblen Förderschlauch und einem flexiblen Druckluftschlauch fixiert ist, kann das die Saugförderdüse umgebende Granulat aufgelockert und so ein Nachrutschen des Granulats in einen Förderbereich der Saugförderdüse bewirkt werden.

Zum Fördern des Granulats wird die Saugförderdüse, vorzugsweise mit einer Ansaugseite der Saugförderdüse nach unten zeigend, in einen Granulatbehälter eingeführt. Über die durch das Vibrationselement verursachten Bewegungen der Saugförderdüse innerhalb des Granulatbehälters wird das die Saugförderdüse umgebende Granulat aufgelockert, welches folglich durch die Schwerkraft angetrieben abwärtsrutscht. Sollte aufgrund von Verkantungen der Granulatkörner ein Nachrutschen des Granulats verhindert sein und sich demzufolge ein Hohlraum direkt vor der Vorderseite der Saugförderdüse gebildet haben, wird durch die Vibrationen des Düsenkörpers das Nachrutschen angeregt und der Hohlraum durch das aufgelockerte und abwärts rutschende Granulat gefüllt, so dass der Förderprozess fortgesetzt werden kann.

Zur Erzeugung der Vibrationen des Vibrationselements wird die für das pneumatische Fördern des Granulats benötigte Druckluft von der Druckluftaufnahme über die erste Öffnung in den Führungskanal eingeleitet. Durch die in den ringförmigen Führungskanal eingeleitete Druckluft wird der in dem Führungskanal frei gelagerte Körper zu einer periodischen Umlaufbewegung innerhalb des Führungskanals angetrieben. Die durch die periodische Umlaufbewegung des Körpers innerhalb des Führungskanals hervorgerufene Zentrifugalkraft verursacht Vibrationen innerhalb des Düsenkörpers, die die Saugförderdüse in Bewegung versetzen. Hierdurch wird folglich ein einfach ausgebildetes, wartungsarmes und zuverlässiges Vibrationselement erreicht, dessen Betrieb an den Förderprozess der Saugförderdüse gekoppelt ist.

Über die zweite Öffnung wird die in den Führungskanal eingeleitete Druckluft in den Förderkanal eingeleitet, wo diese die Förderung des Granulats durch den Förderkanal bewirkt. Somit ist der technische Vorteil erreicht, dass die zum Fördern des Granulats durch den Förderkanal benötigte Druckluft ebenfalls für die Erzeugung der Vibrationen des Düsenkörpers durch das Vibrationselement verwendet wird. Damit kann auf eine zusätzliche Druckluftzufuhr verzichtet werden. Ferner ist gewährleistet, dass durch die Führung der Druckluft durch das Vibrationselement in den Förderkanal die Saugfunktion der Saugförderdüse mit der Erzeugung der Vibrationen durch das Vibrationselement gekoppelt sind, so dass das Auftreten der Vibrationswirkung des Düsenkörpers bei Inbetriebnahme der Saugförderdüse durch das Zuführen einer Druckluft über die Druckluftzufuhr automatisch gewährleistet ist.

Nach einer Ausführungsform ist der Führungskanal des Vibrationselements radial um den Förderkanal herum ausgebildet. Hierdurch wird der technische Vorteil einer möglichst platzsparenden Bauform der Saugförderdüse erreicht. Ferner wird durch die radiale Anordnung des Führungskanals erreicht, dass die durch die Umlaufbewegung des Körpers innerhalb des Führungskanals erzeugte Zentrifugalkraft senkrecht zu einer durch den Förderkanal definierten Längsrichtung des Düsenkörpers gerichtet ist. Dadurch wird erreicht, dass die durch die Vibrationen des Vibrationselements hervorgerufenen Bewegungen des Düsenkörpers ebenfalls primär senkrecht zur Längsrichtung des Düsenkörpers gerichtet sind, wodurch das Granulat effektiver aufgelockert und das Nachrutschen des Granulats in den Förderbereich direkt vor der Ansaugseite der Saugförderdüse verbessert wird.

Nach einer Ausführungsform ist die äußere Umfangswandung des Führungskanals trapezförmig ausgebildet. Hierdurch wird der technische Vorteil erreicht, dass über die trapezförmige äußere Umfangswandung eine Spur definiert wird, in der der Körper des Vibrationselements während der Umlaufbewegung innerhalb des Führungskanals gehalten wird. Hierüber werden der technische Vorteil einer höheren Laufruhe des Körpers und einer damit verbundenen Verringerung reibungsbedingter Abnutzungseffekte erreicht.

Nach einer Ausführungsform ist der Körper ein kugelförmiger Körper. Hierdurch wird ebenfalls der technische Vorteil einer höheren Laufruhe des Körpers und einer damit verbundenen Verringerung reibungsbedingter Abnutzungseffekte erreicht.

Nach einer Ausführungsform ist die erste Öffnung des Führungskanals als ein erster Druckluftkanal ausgebildet, welcher tangential zum Führungskanal an einer äußeren Umfangswandung des Führungskanals ausgebildet ist. Hierdurch wird der technische Vorteil erreicht, dass beim Einleiten der Druckluft in den Führungskanal der Druckluftstrom in einer Richtung durch den Förderkanal strömt. Dies gewährleistet wiederum, dass der Körper zu einer periodischen Umlaufbewegung durch den Führungskanal entlang dieser Richtung angetrieben wird.

Nach einer Ausführungsform ist die zweite Öffnung des Führungskanals als ein zweiter Druckluftkanal ausgebildet, welcher mit einem dritten Druckluftkanal kommuniziert, welcher eine Mehrzahl von vierten Druckluftkanälen aufweist, welche mit dem Förderkanal kommuniziert.

Nach einer Ausführungsform ist der dritte Druckluftkanal radial um den Förderkanal herum ausgebildet. Hierdurch wird der technische Vorteil einer platzsparenden Struktur der Saugförderdüse erreicht.

Nach einer Ausführungsform weist der dritte Druckluftkanal einen Querschnitt mit einem verjüngten V-förmigen Endbereich auf, wobei die Mehrzahl von vierten Druckluftkanälen am verjüngten V-förmigen Endbereich des dritten Druckluftkanals ausgebildet ist. Durch den verjüngten V-förmigen Endbereich, der sich in Richtung des Förderkanals erstreckt, wird ein Düseneffekt erzielt, indem durch den sich verjüngenden V-förmigen Endbereich des dritten Druckluftkanals die Druckluft in Richtung der vierten Druckluftkanäle und des Förderkanals beschleunigt wird. Ferner sind durch das radiale Ausbilden der vierten Druckluftkanäle in dem verjüngten V-förmigen Endbereich des dritten Druckluftkanals die vierten Druckluftkanäle radial an einer äußeren Umfangswand des Förderkanals angeordnet. Hierdurch wird der technische Vorteil erreicht, dass die durch die vierten Druckluftkanäle in den Förderkanal eingeleitete Druckluft über den gesamten Querschnitt des Förderkanals gleichmäßig in den Förderkanal eingeleitet wird. Dies trägt wiederum zu einer Verbesserung der Saugleistung der Saugförderdüse bei.

Nach einer Ausführungsform weisen die vierten Druckluftkanäle der Mehrzahl von vierten Druckluftkanälen kleinere Durchmesser auf als der dritte Druckluftkanal. Hierdurch wird ebenfalls der technische Vorteil eines Düseneffekt erreicht, indem die von dem dritten Druckluftkanal mit größeren Durchmesser in die vierten Druckluftkanäle mit kleineren Durchmessern geleitete Druckluft durch die Verringerung der Durchmesser der Druckluftkanäle eine Beschleunigung erfährt. Hierdurch wird wiederum die Saugleistung der Saugförderdüse erhöht.

Nach einer Ausführungsform weisen die vierten Druckluftkanäle der Mehrzahl von vierten Druckluftkanälen in Richtung des Förderkanals abnehmende Durchmesser auf. Hierdurch wird wiederum der technische Vorteil eines Düseneffekts und die damit verbundene Erhöhung der Saugleistung der Saugförderdüse erreicht.

Nach einer Ausführungsform weist der Düsenkörper an einer Ansaugseite des Düsenkörpers eine Mehrzahl von Abstandshaltern auf, die in einer Längsrichtung des Düsenkörpers über die Ansaugöffnung hinaus hervorstehen. Hierdurch wird der technische Vorteil eines festgelegten Förderbereichs der Saugförderdüse erreicht. Durch die Mehrzahl von Abstandshaltern wird verhindert, dass die Saugförderdüse sich an einem größeren Gegenstand, beispielsweise einer Wand eines Granulatbehälters, festsaugt und folglich zum Fortsetzen der Förderung des Granulats manuell vom Gegenstand gelöst werden muss. Somit kann durch die Abstandshalter gewährleistet werden, dass der Bereich unmittelbar vor der Ansaugseite mit entsprechender Ansaugöffnung des Düsenkörpers für das zu fördernde Granulat freigehalten ist. Somit kann die Saugförderdüse während des Förderprozesses auf dem Boden des Granulatbehälters abgelegt werden kann, ohne dass der Förderprozess durch Festaugen der Düse an einer Behälterwand unterbrochen wird.

Nach einer Ausführungsform weist der Düsenkörper an einer Förderseite des Düsenkörpers einen Anschluss für einen Förderschlauch auf. Hierdurch wird der technische Vorteil erreicht, dass die Saugförderdüse mittels eines beliebigen Förderschlauchs problemlos an einer geeigneten Fördervorrichtung anschließbar ist. Nach einer Ausführungsform weist das Vibrationselement eine dritte Öffnung, die mit dem Führungskanal kommuniziert, und einen Verschlusstopfen auf. Hierdurch wird der technische Vorteil erreicht, dass der Führungskanal mit dem frei gelagerten Körper des Vibrationselements befüllbar ist.

Nach einer Ausführungsform ist der Verschlusstopfen über eine Gewindeverbindung lösbar mit dem Vibrationselement verbindbar. Hierdurch wird der technische Vorteil einer einfachen und sicheren Verbindung des Verschlussstopfens mit dem Vibrationselement erreicht.

Nach einer Ausführungsform ist an der Druckluftzufuhr über eine Gewindeverbindung lösbar ein Druckluftanschluss eines Druckluftschlauchs mit dem Düsenkörper verbindbar. Hierdurch wird der technische Vorteil eines problemlosen und schnell durchführbaren Anschließens der Saugförderdüse an eine entsprechende Druckluftquelle erreicht.

Nach einer Ausführungsform ist der Düsenkörper mittels 3D-Druck gefertigt. Hierdurch wird der technische Vorteil erreicht, dass die Saugförderdüse mit kurzer Fertigungsdauer, kostengünstig und präzise fertigbar ist.

Nach einer Ausführungsform ist der Düsenkörper aus Kunststoff gefertigt. Hierdurch wird der technische Vorteil einer strukturfesten, robusten, leichten und verschleißarmen Bauweise der Saugförderdüse erreicht. Ferner ist gewährleistet, dass die Saugförderdüse mittels eines 3D-Druck-Verfahrens fertigbar ist.

Nach einer Ausführungsform ist der Düsenkörper aus Metall gefertigt. Hierdurch wird der technische Vorteil einer strukturfesten, robusten, leichten und verschleißarmen Bauweise der Saugförderdüse erreicht. Ferner ist gewährleistet, dass die Saugförderdüse mittels eines 3D-Druck-Verfahrens fertigbar ist.

Nach einer Ausführungsform ist die Druckluftzufuhr parallel zur Längsrichtung des Düsenkörpers am Düsenkörper angeordnet. Hierdurch wird der technische Vorteil einer möglichst platzsparenden Bauform der Saugförderdüse erreicht.

Nach einer Ausführungsform ist die Vibrationsrichtung des durch das Vibrationselement in Vibration versetzten Düsenkörpers primär senkrecht zur Längsachse des Düsenkörpers orientiert. Hierdurch wird der technische Vorteil erreicht, dass die durch die Vibrationen des Vibrationselements erzeugten Bewegungen des Düsenkörpers ebenfalls senkrecht zur Längsrichtung des Düsenkörpers orientiert sind. Hierdurch werden wiederum die Auflockerung des um die Saugförderdüse angeordneten Granulats und die damit verbundenen Saugleistung der Saugförderdüse verbessert.

### Beschreibung der Figuren

Ausführungsbeispiele der Erfindung sind in den Zeichnungen dargestellt und werden im Folgenden näher beschrieben.

Es zeigen:
- Fig. 1: eine schematische Seitenschnittansicht der Saugförderdüse gemäß einer Ausführungsform der vorliegenden Erfindung;
- Fig. 2: eine schematische perspektivische Ansicht der Saugförderdüse gemäß einer Ausführungsform der vorliegenden Erfindung;
- Fig. 3: eine schematische Frontansicht der Saugförderdüse gemäß einer Ausführungsform der vorliegenden Erfindung;
- Fig. 4: eine schematische Seitenschnittansicht entlang der Schnittachse E-E in Fig. 3 der Saugförderdüse gemäß einer Ausführungsform der vorliegenden Erfindung;
- Fig. 5: eine schematische Seitenansicht der Saugförderdüse gemäß einer Ausführungsform der vorliegenden Erfindung;
- Fig. 6: eine schematische Frontschnittansicht entlang der Schnittachse D-D in Fig. 5 der Saugförderdüse gemäß einer Ausführungsform der vorliegenden Erfindung;
- Fig. 7: eine schematische Frontschnittansicht entlang der Schnittachse B-B in Fig. 5 der Saugförderdüse gemäß einer Ausführungsform der vorliegenden Erfindung;
- Fig. 8: eine schematische Seitenschnittansicht der Saugförderdüse gemäß einer weiteren Ausführungsform der vorliegenden Erfindung; und
- Fig. 9: eine schematische Seitenschnittansicht der Saugförderdüse gemäß einer weiteren Ausführungsform der vorliegenden Erfindung.

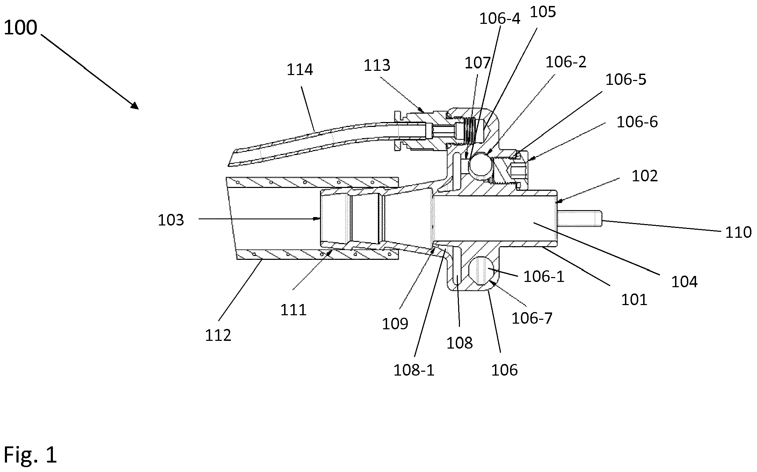

Fig. 1 zeigt eine schematische Seitenschnittansicht der Saugförderdüse gemäß einer Ausführungsform der vorliegenden Erfindung. Gemäß Fig. 1 umfasst die Saugförderdüse 100 zum pneumatischen Fördern von Granulat nach einer Ausführungsform einen Düsenkörper 101 mit einem Förderkanal 104, einer Druckluftzufuhr 105 zum Bereitstellen von Druckluft zum pneumatischen Fördern des Granulats durch den Förderkanal 104 und einem Vibrationselement 106, welches dazu ausgebildet ist, den Düsenkörper 101 in Vibrationen zu versetzen, wobei das Vibrationselement 106 einen ringförmigen Führungskanal 106-1 und einen im Führungskanal 106-1 frei gelagerten Körper 106-2 aufweist, wobei der Führungskanal 104 über eine erste Öffnung 706-3 (nicht in Fig. 1 gezeigt) mit der Druckluftzufuhr 105 kommuniziert, um Druckluft in den Führungskanal 106-1 einzuführen, um den frei gelagerten Körper 106-2 in eine periodische Bewegung innerhalb des Führungskanals 106-1 anzutreiben, welche den Düsenkörper 101 in Vibrationen versetzt, und wobei der Führungskanal 106-1 über eine zweite Öffnung 106-4 mit dem Förderkanal 104 kommuniziert, um die Druckluft zum pneumatischen Fördern des Granulats von der Druckluftzufuhr 105 über den Führungskanal 106-1 in den Förderkanal 104 des Düsenkörpers 101 einzubringen.

Gemäß Fig. 1 kann der Förderkanal 104 als ein geradliniger Kanal ausgebildet sein und eine Längsrichtung des Düsenkörpers 101 definieren. Der Düsenkörper 101 kann ferner in Längsrichtung eine Ansaugseite 102 und eine der Ansaugseite 102 gegenüberliegende Förderseite 103 aufweisen, wobei an der Ansaugseite 102 eine mit dem Förderkanal 104 kommunizierende Ansaugöffnung 102-1 und an der Förderseite 103 eine mit dem Förderkanal 104 kommunizierende Förderöffnung 103-1 ausgebildet sein können.

Gemäß Fig.1 kann das Vibrationselement 106 einstückig in den Düsenkörper 101 integriert sein. Der Führungskanal 106-1 kann hierbei radial um den Förderkanal 104 angeordnet sein und mit dem Förderkanal 104 über die zweite Öffnung 106-4 kommunizieren. Nach einer Ausführungsform ist die zweite Öffnung 106-4 als ein zweiter Druckluftkanal 107 ausgebildet, welcher mit einem dritten Druckluftkanal 108 kommuniziert, welcher wiederum mit einer Mehrzahl von vierten Druckluftkanälen 109 kommuniziert. Über den zweiten Druckluftkanal 107, den dritten Druckluftkanal 108 und die Mehrzahl von vierten Druckluftkanälen 109 kann somit eine Kommunikation des Führungskanals 106 und des Förderkanals 104 erreicht werden.

Wie in Fig. 1 gezeigt, kann im Führungskanal 106-1 ferner der Körper 106-2 des Vibrationselements 106 frei gelagert angeordnet sein, wobei nach einer Ausführungsform der Körper 106-2 des Vibrationselements 106 als eine Kugel ausgebildet sein kann.

Nach einer Ausführungsform ist in radialer Richtung zum Vibrationselement 106 am Düsenkörper 101 die Druckluftzufuhr 105 ausgebildet. Mittels einer Gewindeverbindung zwischen einem Druckluftanschluss 113 mit Druckluftschlauch 114 einer externen Druckluftquelle und der Druckluftzufuhr 105 des Düsenkörpers 101 ist eine lösbare Verbindung der Saugförderdüse 100 mit einer beliebigen Druckluftquelle herstellbar.

Die Druckluftzufuhr 105 kommuniziert über eine erste Öffnung 706-3 (in Fig. 1 nicht gezeigt) mit dem Führungskanal 106-1. Somit ist ermöglicht, das Vibrationselement 106 über die durch die Druckluftzufuhr 105 bereitgestellte Druckluft anzutreiben. Hierbei veranlasst die in den Führungskanal 106-1 eingeführte Druckluft eine periodische Umlaufbewegung des Körpers 106-2 innerhalb des Führungskanals 106-1. Um eine andauernde durch die eingeleitete Druckluft der Druckluftzufuhr 105 angetriebene periodische Umlaufbewegung des Körpers 106-2 zu ermöglichen, tritt die in den Führungskanal 106-1 eingeleitete Druckluft über die dritten und vierten Druckluftkanäle 107, 108 aus dem Führungskanal 106-1 aus und in den Förderkanal 104 ein. Dies ermöglicht einen konstanten innerhalb des Führungskanals 106-1 zirkulierenden Druckluftstrom, der ein kontinuierliches Antreiben des Körpers 106-2 zur periodischen Umlaufbewegung innerhalb des Führungskanals 106-1 ermöglicht.

Nach einer Ausführungsform ist der dritte Druckluftkanal 108 radial um den Förderkanal 104 und relativ zur Längsrichtung des Düsenkörpers 101 hinter dem Führungskanal 106-1 angeordnet. Ferner weist der dritte Druckluftkanal 108 nach einer Ausführungsform einen Querschnitt mit einem sich verjüngenden V-förmigen Endbereich 108-1 auf. Die Mehrzahl von vierten Druckluftkanälen 109 kann hierbei im verjüngten V-förmigen Endbereich 108-1 des dritten Druckluftkanals 108 radial ausgebildet sein. Durch den V-förmigen Endbereich 108-1 des dritten Druckluftkanals 108 kann ein Düseneffekt erzielt werden, indem die in Richtung der vierten Druckluftkanäle 109 strömende Druckluft aufgrund des abnehmenden Umfangs des V-förmigen Endbereichs 108-1 beschleunigt wird.

Gemäß einer Ausführungsform ist die Druckluftzufuhr 105 parallel zur Längsrichtung des Düsenkörpers 101 und in Richtung der Förderseite 103 des Düsenkörpers 101 ausgebildet. Der über eine Gewindeverbindung mit der Druckluftzufuhr 105 verbindbare Druckluftanschluss 113 kann somit ebenfalls entlang der Längsrichtung des Düsenkörpers 101 orientiert sein, was zu einer platzsparenden Bauform des Düsenkörpers 101 der Saugförderdüse 100 beiträgt. Ferner kann der Druckluftschlauch 114 des Druckluftanschlusses 113 entlang der Längsrichtung des Düsenkörpers 101 in Richtung der Förderseite 103 des Düsenkörpers 101 und entlang der Richtung des Förderschlauchs 112 orientiert sein, wodurch die Verzugsrichtung der Saugförderdüse 100 bestimmt und ein Abklemmen des Druckluftschlauchs 114 während des Betriebs der Saugförderdüse 100 vermieden werden kann.

Nach einer Ausführungsform ist am Führungskanal 106-1 des Vibrationselements 106 eine dritte Öffnung 106-5 mit einem Verschlussstopfen 106-6 ausgebildet, über die der Körper 106-2 in den Führungskanal 106-1 einführbar und entfernbar ist. Vorzugsweise ist die dritte Öffnung 106-5 in Richtung der Ansaugseite 102 des Düsenkörpers 101 am Vibrationselement 106 ausgebildet, wodurch eine hohe Zugänglichkeit der dritten Öffnung 106-5 erreicht wird.

Nach einer Ausführungsform weist der Düsenkörper 101 an der Ansaugseite 102 eine Mehrzahl (in Fig. 1 nur einfach gezeigt) von Abstandshaltern 110 auf, die in Längsrichtung des Düsenkörpers 101 über die Ansaugöffnung 102-1 hinaus hervorstehen. Die Mehrzahl von Abstandshaltern 110 gewährleistet das Freihalten eines sich direkt vor der Ansaugöffnung 102-1 befindenden Förderbereichs der Saugförderdüse 100 und verhindert ein Ansaugen der Saugförderdüse 100 an beispielsweise einer Behälterwand eines Granulatsbehälters.

Darüber hinaus kann der Düsenkörper 101 an der Förderseite 103 einen Anschlussbereich 111 für den Anschluss eines Förderschlauch 112 aufweisen, wodurch die Saugförderdüse 100 problemlos über einen entsprechenden Förderschlauch 112 mit einer beliebigen Fördervorrichtung verbindbar ist.

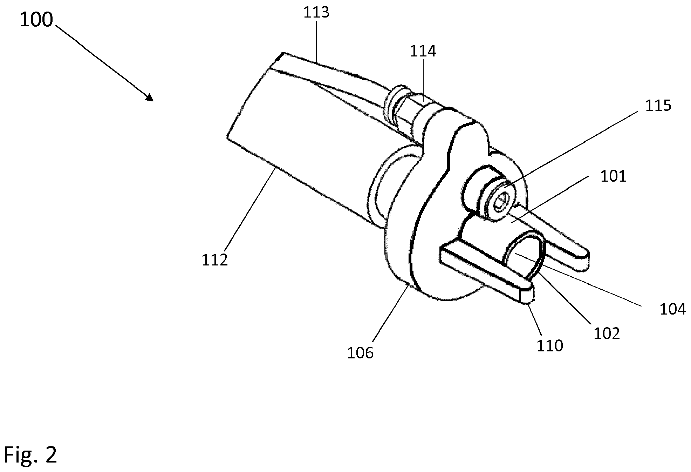

In Fig. 2 ist eine schematische perspektivische Ansicht der Saugförderdüse 100 gemäß einer Ausführungsform gezeigt. Gemäß Fig. 2 kann nach einer Ausführungsform die Mehrzahl von Abstandshaltern 110 jeweils an gegenüberliegenden Seiten des Förderkanals 104 am Düsenkörper 101 ausgebildet sein, wobei die Mehrzahl von Abstandshaltern 110 zwei oder mehr betragen kann.

Ferner kann die Saugförderdüse 100 mit einem zylindrischen Düsenkörper 101 ausgebildet sein, der eine radial angeordnete ringförmige Erweiterung aufweist, in der das Vibrationselement 106 angeordnet ist.

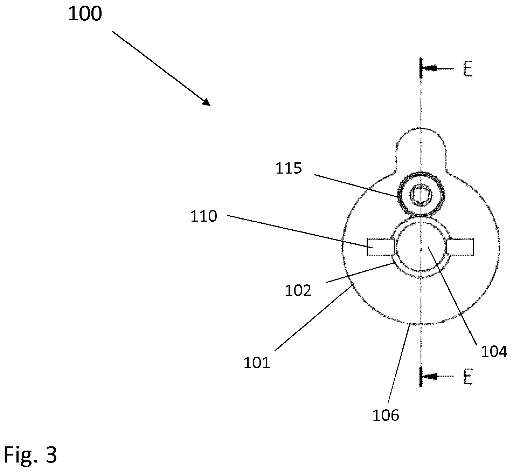

In Fig. 3 ist eine schematische Frontansicht der Saugförderdüse 100 gemäß einer Ausführungsform gezeigt. Wie in Fig. 3 gezeigt, kann der Förderkanal 104 zylinderförmig ausgebildet sein. Ferner kann das Vibrationselement 106 eine primär kreisförmige Umfangswandung aufweisen.

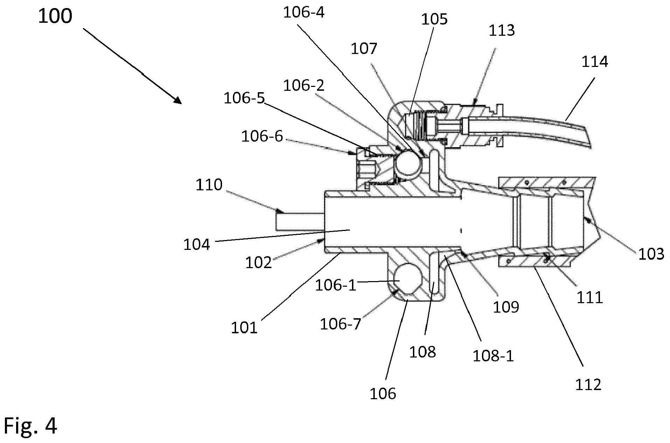

In Fig. 4 ist eine schematische Seitenschnittansicht entlang der Schnittachse E-E in Fig. 3 der Saugförderdüse 100 gemäß einer Ausführungsform gezeigt. Gemäß Fig. 4 können die vierten Druckluftkanäle 109, die sowohl mit dem dritten Druckluftkanal 108 als auch mit dem Förderkanal 104 kommunizieren, als Kanäle mit geringerem Durchmesser als der dritte Druckluftkanal 108 ausgebildet sein. Ferner können die vierten Druckluftkanäle 109 als verjüngte Kanäle ausgebildet sein und in Richtung des Förderkanals 104 kontinuierlich abnehmende Durchmesser aufweisen. Hierdurch kann der durch den V-förmigen Endbereich 108-1 des dritten Druckluftkanals 108 erzielte Düseneffekt weiter verstärkt werden, indem die durch die sich weiter verjüngenden vierten Druckluftkanäle 108 in den Förderkanal 104 geleitete Druckluft durch die Verringerung der Durchmesser der vierten Druckluftkanäle 108 weiter an Geschwindigkeit zunimmt.

Nach einer Ausführungsform weist die äußere Umfangswandung 106-7 des Führungskanals 106-1 eine trapezförmige Form auf. Durch die trapezförmige Umfangswandung 106-7 wird eine Spur gebildet, in der der Körper 106-2 während der Umlaufbewegung innerhalb des Führungskanals 106-1 gehalten werden kann. Hierdurch können die Laufruhe des Körpers 106-2 während der Umlaufbewegung erhöht und der Verschleiß des Führungskanals 106-1 und des Körpers 106-2 herabgesetzt werden.

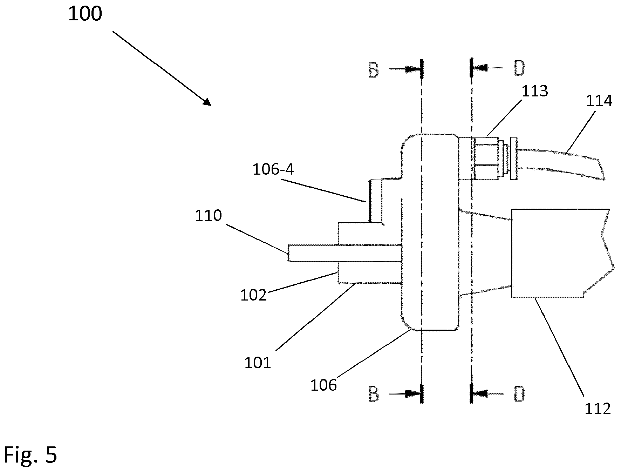

In Fig. 5 ist eine schematische Seitenansicht der Saugförderdüse 100 gemäß einer Ausführungsform gezeigt.

Gemäß Fig. 5 ist nach einer Ausführungsform das Vibrationselement 106 ringförmig um den zylinderförmigen Förderkanal 104 ausgebildet. Gemäß Fig. 5, können die dritte Öffnung 106-5 und der Verschlusstopfen 106-6 des Vibrationselements in Längsrichtung des Düsenkörpers 101 zur Ansaugseite 102 des Düsenkörpers 101 an einer Frontfläche des Vibrationselements 106 angeordnet sein. Ferner kann die Druckluftzufuhr 105 mit dem in Fig. 5 abgebildeten Druckluftanschluss 113 in Längsrichtung an einer Rückfläche des Vibrationselements 106 ausgebildet sein. Der Düsenkörper 101 kann in Längsrichtung vor sowie hinter dem Vibrationselement 106 einen geringeren Durchmesser als das Vibrationselement 106 aufweisen, wobei der Durchmesser des primär zylindrischen Düsenkörpers 101 in Längsrichtung vor und hinter dem Vibrationselement 106 durch den Führungskanal 104 bestimmt ist.

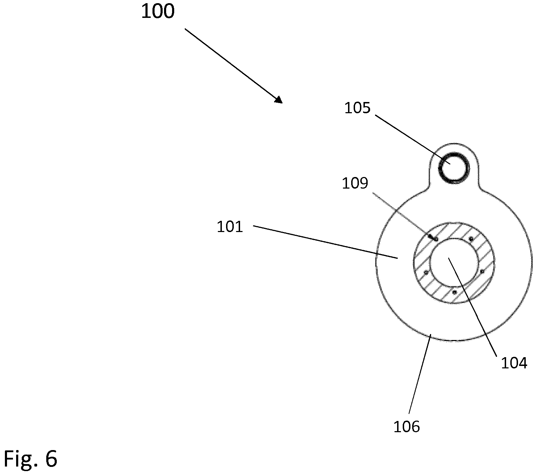

In Fig. 6 ist eine schematische Frontschnittansicht entlang der Schnittachse D-D in Fig. 5 der Saugförderdüse 100 gemäß einer Ausführungsform gezeigt.

Gemäß Fig. 6 kann die Mehrzahl von vierten Druckluftkanälen 109 in einer inneren Umfangswandung des dritten Druckluftkanals 108 und einer äußeren Umfangswandung des Förderkanals 104 radial ausgebildet sein. Durch die radiale Ausbildung der vierten Druckluftkanäle kann die Druckluft in den Förderkanal 104 über dessen gesamten Querschnitt gleichmäßig eingeleitet werden.

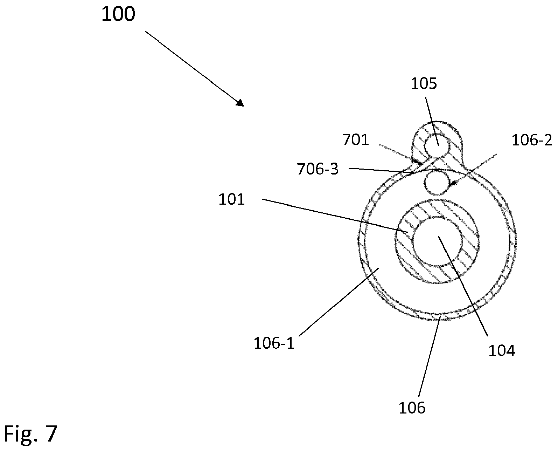

In Fig. 7 ist eine schematische Frontschnittansicht entlang der Schnittachse B-B in Fig. 5 der Saugförderdüse 100 gemäß einer Ausführungsform gezeigt.

Gemäß Fig. 7 ist nach einer Ausführungsform die erste Öffnung 706-3 als ein erster Druckluftkanal 701 ausgebildet, der mit der Druckluftzufuhr 105 und dem Führungskanal 106-1 des Vibrationselements 106 kommuniziert. Der erste Druckluftkanal 701 kann hierbei tangential zu dem Führungskanal 106-1 des Vibrationselements 106 ausgebildet sein. Durch die tangentiale Anordnung des ersten Druckluftkanals 701 kann eine Vorzugsrichtung der durch den Führungskanal 106-1 strömenden Druckluft bestimmt und erreicht werden, dass die über den ersten Druckluftkanal 701 in den Führungskanal 106-1 eingeleitete Druckluft innerhalb des Führungskanals 106-1 eine entlang dieser Vorzugsrichtung gerichtete Zirkulationsbewegung vollzieht. Hierüber kann gewährleistet werden, dass der Körper 106-2 durch die eingeleitete Druckluft zu einer periodischen Umlaufbewegung innerhalb des Führungskanals 106-1 angetrieben wird.

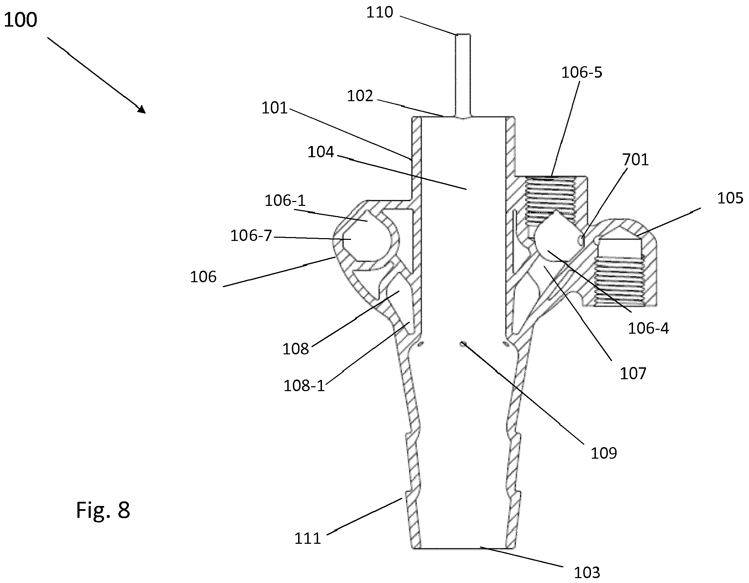

In Fig. 8 ist eine schematische Seitenschnittansicht der Saugförderdüse 100 gemäß einer weiteren Ausführungsform gezeigt.

Wie in Fig. 8 gezeigt, ist nach einer Ausführungsform der zweite Druckluftkanal 107 relativ zum Förderkanal 104 geneigt angeordnet und bildet zum Förderkanal 104 einen Winkel. Ferner ist der zweite Druckluftkanal 107 zwischen dem radial um den Förderkanal 104 angeordneten Führungskanal 106-1 und dem ebenfalls radial um den Förderkanal 104 angeordneten dritten Druckluftkanal 108 ausgebildet. Der dritte Druckluftkanal 108 kann hierbei einen Querschnitt mit einem sich in Richtung der Förderseite 103 des Düsenkörpers 101 hin verjüngenden V-förmigen Endbereich 108-1 aufweisen. Ferner können die vierten Druckluftkanäle 109 an dem verjüngten Ende des V-förmigen Endbereichs 108-1 des dritten Druckluftkanals 108 angeordnet sein.

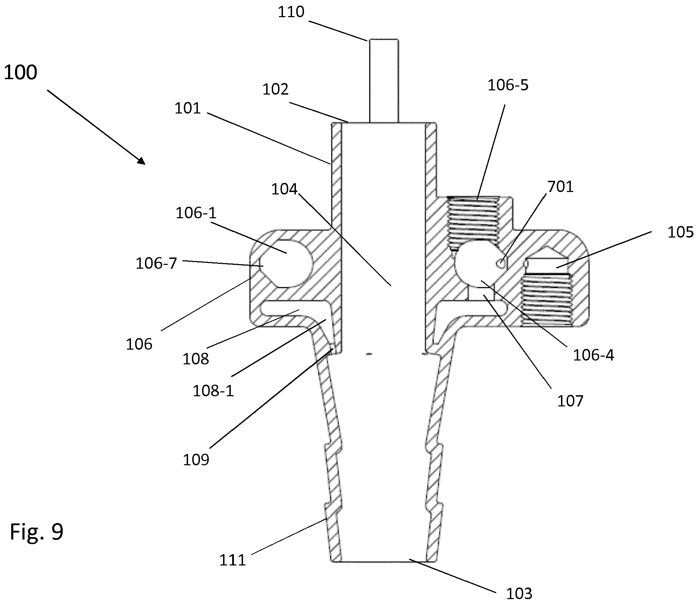

In Fig. 9 ist eine schematische Seitenschnittansicht der Saugförderdüse 100 gemäß einer weiteren Ausführungsform gezeigt.

Gemäß Fig. 9 ist nach einer Ausführungsform der zweite Druckluftkanal 107 parallel zum Förderkanal 104 zwischen dem radial um den Förderkanal 104 angeordneten Führungskanal 106-1 und dem ebenfalls radial um den Förderkanal 104 angeordneten dritten Druckluftkanal 108 ausgebildet. Ferner weist der dritte Druckluftkanal 108 einen sich senkrecht zur Längsrichtung des Düsenkörpers 101 erstreckenden Scheibenförmigen Querschnitt mit einem sich verjüngenden V-förmigen Endbereich 108-1 auf. Der sich verjüngende V-förmige Endbereich 108-1 ist hierbei nahezu parallel zum Förderkanal 104 und in Richtung der Förderseite 103 des Düsenkörpers 101 weisend angeordnet. Die Mehrzahl von vierten Druckluftkanälen 109 kann wiederum am verjüngten Ende des V-förmigen Endbereichs 108-1 radial um den Förderkanal 104 angeordnet sein.

## Patentansprüche

1. Saugförderdüse (100) zum pneumatischen Fördern von Granulat, mit:
einem Düsenkörper (101) mit einem Förderkanal (104), einer Druckluftzufuhr (105) zum Bereitstellen von Druckluft zum pneumatischen Fördern des Granulats durch den Förderkanal (104) und einem Vibrationselement (106), welches dazu ausgebildet ist, den Düsenkörper in Vibrationen zu versetzen,
wobei das Vibrationselement (106) einen ringförmigen Führungskanal (106-1) und einen im Führungskanal (106-1) frei gelagerten Körper (106-2) umfasst,
wobei der Führungskanal (104) über eine erste Öffnung (706-3) mit der Druckluftzufuhr (105) kommuniziert, um Druckluft in den Führungskanal (106-1) einzuführen, um den frei gelagerten Körper (106-2) in eine periodische Bewegung innerhalb des Führungskanals (106-1) zu versetzen, welche den Düsenkörper (101) in Vibrationen versetzt, und
wobei der Führungskanal (106-1) über eine zweite Öffnung (106-4) mit dem Förderkanal (104) kommuniziert, um die Druckluft zum pneumatischen Fördern des Granulats von der Druckluftzufuhr (105) über den Führungskanal (106-1) in den Förderkanal (104) des Düsenkörpers (101) einzubringen.

2. Saugförderdüse (100) nach Anspruch 1, wobei der Führungskanal (106-1) des Vibrationselements (106) radial um den Förderkanal (104) herum ausgebildet ist.

3. Saugförderdüse (100) nach einem voranstehenden Anspruch, wobei die erste Öffnung (706-3) des Führungskanals als ein erster Druckluftkanal (701) ausgebildet ist, welcher tangential zum Führungskanal (106-1) an einer äußeren Umfangswandung des Führungskanals (106-1) ausgebildet ist.

4. Saugförderdüse (100) nach einem voranstehenden Anspruch, wobei die zweite Öffnung (106-4) des Führungskanals (106-1) als ein zweiter Druckluftkanal 107 ausgebildet ist, welcher mit einem dritten Druckluftkanal (108) kommuniziert, welcher eine Mehrzahl von vierten Druckluftkanälen (109) aufweist, welche mit dem Förderkanal (104) kommuniziert.

5. Saugförderdüse (100) nach Anspruch 4, wobei der dritte Druckluftkanal (108) radial um den Förderkanal (104) herum ausgebildet ist.

6. Saugförderdüse (100) nach Anspruch 4, wobei der dritte Druckluftkanal (108) einen Querschnitt mit einem verjüngten V-förmigen Endbereich (108-1) aufweist, und wobei die Mehrzahl von vierten Druckluftkanälen (109) am verjüngten V-förmigen Endbereich (108-1) des dritten Druckluftkanals (108) ausgebildet ist.

7. Saugförderdüse nach Anspruch 6, wobei die vierten Druckluftkanäle (109) der Mehrzahl von vierten Druckluftkanälen (109) kleinere Durchmesser aufweisen als der dritte Druckluftkanal (108).

8. Saugförderdüse (100) nach Anspruch 7, wobei die vierten Druckluftkanäle (109) der Mehrzahl von vierten Druckluftkanälen (109) in Richtung des Förderkanals (104) abnehmende Durchmesser aufweisen.

9. Saugförderdüse (100) nach einem voranstehenden Anspruch, wobei der Düsenkörper (101) an einer Ansaugseite (102) des Düsenkörpers (101) eine Mehrzahl von Abstandshaltern (110) aufweist, die in einer Längsrichtung des Düsenkörpers (101) über eine Ansaugöffnung (102-1) der Ansaugseite (102) hinaus hervorstehen.

10. Saugförderdüse (100) nach einem voranstehenden Anspruch, wobei der Düsenkörper (101) an einer Förderseite (103) des Düsenkörpers (101) einen Anschlussbereich (111)für einen Förderschlauch (112) aufweist.

11. Saugförderdüse (100) nach einem voranstehenden Anspruch, wobei das Vibrationselement (106) eine dritte Öffnung (106-5), die mit dem Führungskanal (106-1) kommuniziert, und einen Verschlusstopfen (106-6) aufweist.

12. Saugförderdüse (100) nach einem voranstehenden Anspruch, wobei an der Druckluftzufuhr (105) über eine Gewindeverbindung lösbar ein Druckluftanschluss (113) eines Druckluftschlauchs (114) mit dem Düsenkörper (101) verbindbar ist.
